# EUROPEAN PATENT SPECIFICATION

(11) **EP 0 759 874 B1**
(45) Date of publication and mention of the grant of the patent: **21.04.1999**
(21) Application number: 95919526.4
(22) Date of filing: 22.05.1995
(51) Int. Cl.: B65B 61/24

(54) **CONDITIONING OF PACKAGES**
KONDITIONIEREN VON VERPACKUNGEN
CONDITIONNEMENT D'EMBALLAGES

(30) Priority: 20.05.1994 GB 9410153
(43) Date of publication of application: 05.03.1997
(73) Proprietor: ISHIDA CO., Ltd., Kyoto-shi, Kyoto (JP)
(72) Inventor: FENLON, Christopher, Bristol BS14 ODR (GB)
(74) Representative: Stuart, Ian Alexander
(86) International application number: GB9501154
(87) International publication number: WO9532123

(56) References cited:
- EP-A- 0 242 594
- DE-U- 9 320 109
- GB-A- 915 857
- US-A- 3 702 584

## Description

The present invention relates to methods and apparatus that can be used to condition packages containing, for example, foodstuffs such as snack foods.

Packets of loose articles, particularly articles of irregular shapes, such as snack foods, can cause problems during their production cycle.

These problems are due to the scrunched up form or the uneven distribution of the articles within the packets, making it difficult to test, weigh or pack them. Tests include such things as checking that the packets are correctly sealed. This uneven distribution of articles within a package may also be unsuitable for presentation purposes on supermarket shelves.

It is known to agitate packages by passing them over square-section rollers with gaps in between.

EP-A-0,242,594 discloses conditioning apparatus employing a conveyor belt which is itself oscillated with a circular motion. A further endless belt is mounted slightly above the conveyor to provide a plate-like member which contacts bags carried by the conveyor.

DE-U-9320109 discloses conditioning apparatus having upper and lower conveyor belts spaced to define a transport gap. Levelling shafts are located beneath the upper run of the lower belt to impart rising and falling motions to parts thereof.

There is a need for an apparatus which will effectively redistribute the loose articles evenly within the packaging without crushing or damaging the packet or its contents.

According to the present invention there is provided apparatus for evenly distributing loose articles within a package comprising
a conveyor surface for conveying the package; agitating means for agitating the package on the conveyor surface and
pressing means for pressing on the package from above during agitation to smooth it; characterised in that the pressing means comprises a weighted flexible layer.

In another aspect the invention provides pressing means suitable for use in such apparatus having a weighted flexible layer comprising a driven belt for contacting packages of loose articles from above as they move along a conveying path, and a catenary element suspended to act on the belt from behind, thereby to apply pressure to the packages through the belt.

Since the belt moves past the catenary element in contact with it, desirably the catenary element has friction-reducing means such as rollers where they meet.

The conveyor can be a moving belt. The agitating means may comprise means for agitating the surface of the belt.

We find that rotating members having one or more surface eccentricities eg a polygonal sectioned roller, engaging the undersurface of the packet, or of the belt, or a plurality of such rollers, works well.

The pressing means is flexible to help prevent damage to the packet and/or its contents.

We have found that a flexible (preferably elastic) sheet, acted on from above by a series of weights having mutual independence of movement, is effective.

A row of linked weights such as a catenary chain which may include rollers, is suitable.

Furthermore the flexible sheet is desirably mounted so as to be movable in the conveying direction to reduce possible damaging interference with the packet during contact.

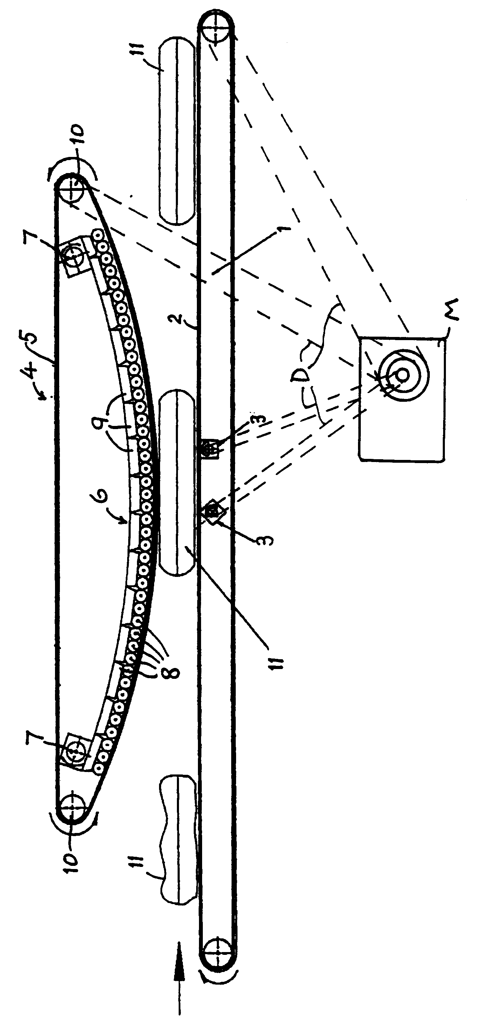

In order that the present invention is more readily understood, an embodiment will now be described in more detail for the purposes of illustration only, with reference to the accompanying drawing wherein
the sole figure shows a diagrammatic side view of an apparatus for conditioning packages.

In this embodiment of the present invention, the apparatus for conditioning packages is designed so that it can be incorporated into a production line.

Thus, a conveyor 1 fitted with a continuous conveyor belt 2 is provided to convey packages in a horizontal direction. The conveyor belt 2 provides a surface which the packages, such as packets 11 of snack foods, can rest on.

Within the conveyor 1, two square-sectioned rollers 3 are arranged in contact with the underside of the conveyor belt. Upon rotation the roller corners cause the conveyor belt 2 to rise and then fall flat again, in a flapping motion.

In this particular embodiment, two square sectioned rollers are provided although it is possible to have one or a multiplicity and of any polygonal or other non-circular and/or eccentrically mounted form. Each square sectioned roller 3 is rotated out of phase (by 45° in this case) and at a speed which agitates the surface of the conveyor belt sufficiently to give the desired redistribution of packet contents; this is easily determinable by trial with the packets concerned.

The square sectioned rollers 3 may be powered by any suitable means such as pulleys and belts connected to one or more motors M.

Although the agitation of the surface of the belt provides the energy for the articles to move within the package, a means of gently smoothing the package is required for even distribution.

It is important that this smoothing of the package is not so severe as to crush the articles or damage the package.

In order to achieve this, another conveyor 4 is located above the first conveyor 1. This overhead conveyor 4 is fitted with an elasticated conveyor belt 5 so that it can be stretched to hang down from the conveyor supports 10.

To stretch the conveyor belt 5 in a downward direction a catenary pressing element 6 is provided, here taking the form of a series of transversely-elongate plate-form weights 9 pivotally linked to one another edge-to-edge, positioned within the conveyor 4 and supported at either end by fixed supports 7. It hangs from its supports 7 substantially in a catenary and rests on the inside of the lower run of the elasticated conveyor belt 5 via a series of low-friction rollers 8, eg as are currently available commercially as a "low back line pressure" conveyor chain eg from Rexnord or Unichain.

The overhead conveyor 4 and the lower conveyor are set to run at substantially the same speed to aid in the redistribution. In the present embodiment, a common drive motor M is used to drive all of the overhead "preconditioning" conveyor 4, the lower conveyor and the square-section rollers, via drives D giving appropriate speed ratios.

## Claims

1. Apparatus for evenly distributing loose articles within a package (11) comprising
a conveyor surface (2) for conveying the package (11); agitating means (3) for agitating the package (11) on the conveyor surface (2) and
pressing means (6) for pressing on the package (11) from above during agitation to smooth it; characterised in that the pressing means (6) comprises a weighted flexible layer.

2. Apparatus according to claim 1 wherein the conveyor surface (2) is provided by a moving belt, and the agitating means (3) comprises means for agitating the surface of the belt.

3. Apparatus according to claim 1 or claim 2 wherein the agitating means (3) comprise rotating members having one or more surface eccentricities and arranged to engage the undersurface of the package (11), or of the belt (2).

4. Apparatus according to any preceding claim wherein the pressing means (6) comprises a flexible sheet (5), acted on from above by a series of weights (9) having mutual independence of movement.

5. Apparatus according to claim 4 wherein the series of weights (9) is provided by a catenary pressing element (6) which stretches the flexible sheet (5) in a downward direction.

6. Apparatus according to claim 4 or 5 wherein the series of weights (9) act on the sheet (5) via rollers (8).

7. Apparatus according to any preceding claim wherein the portion of the pressing means (6) which contacts packages (11) in use is arranged to be movable in the conveying direction to reduce possible damaging interference with the package (11) during contact.

8. Pressing means for use in apparatus according to any preceding claim having a weighted flexible layer comprising a driven belt (5) for contacting packages of loose articles from above as they move along a conveying path, and a catenary element (8,9) suspended to act on the belt (5) from behind, thereby to apply pressure to the packages (11) through the belt.

9. Pressing means according to claim 8 wherein the catenary element (8,9) has friction-reducing means (8) where it contacts the belt (5).

10. Pressing means according to claim 8 or 9 wherein the catenary element (8,9) stretches the flexible belt in a downwardly direction.

## Patentansprüche

1. Vorrichtung zum gleichmäßigen Verteilen loser Gegenstände innerhalb einer Packung (11), umfassend:
eine Förderer-Oberfläche (2) zum Befördern der Packung (11); Rüttelmittel (3) zum Rütteln der Verpackung (11) auf der Förderer-Oberfläche (2) und
Preßmittel (6), um während des Rüttelns von oben auf die Packung (11) zu drücken, um sie zu glätten;
dadurch gekennzeichnet, daß das Preßmittel (6) eine gewichtsbelastete flexible Schicht umfaßt.

2. Vorrichtung nach Anspruch 1, worin die Förderer-Oberfläche (2) aus einem beweglichen Band besteht und das Rüttelmittel (3) Mittel zum Rütteln der Oberfläche des Bandes umfaßt.

3. Vorrichtung nach Anspruch 1 oder 2, worin das Rüttelmittel (3) Rotationselemente umfaßt, die eine oder mehrere Oberflächenexzentrizitäten aufweisen und so angeordnet sind, daß sie an der Unterfläche der Packung (11) oder des Bandes (2) angreifen.

4. Vorrichtung nach einem der vorangegangenen Ansprüche, worin das Preßmittel (6) ein flexibles Blatt (5) umfaßt, auf das von oben eine Reihe von Gewichten (9) wirkt, die in ihrer Bewegung voneinander jeweils unabhängig sind.

5. Vorrichtung nach Anspruch 4, worin die Reihe von Gewichten (9) durch ein Ketten-Preßelement (6) bereitgestellt ist, das das flexible Blatt (5) in Abwärtsrichtung spannt.

6. Vorrichtung nach Anspruch 4 oder 5, worin die Reihe von Gewichten (9) über Walzen (8) auf das Blatt (5) wirkt.

7. Vorrichtung nach einem der vorangegangenen Ansprüche, worin der Abschnitt des Preßmittels (6), der bei der Verwendung Packungen (11) berührt, so angeordnet ist, daß er in Förderrichtung bewegt werden kann, wodurch die Wahrscheinlichkeit der Beeinträchtigung durch Beschädigung der Packung (11) während der Berührung verringert wird.

8. Preßmittel zur Verwendung bei einer Vorrichtung nach einem der vorangegangenen Ansprüche mit einer gewichtsbelasteten flexiblen Schicht, das ein angetriebenes Band (5), um Packungen loser Gegenstände von oben zu berühren, wenn sie sich einen Förderweg entlang bewegen, und ein Kettenelement (8,9) umfaßt, das so aufgehängt ist, daß es von der Rückseite her auf das Band (5) wirkt, wodurch auf die Packungen (11) über das Band Druck ausgeübt wird.

9. Preßmittel nach Anspruch 8, worin das Kettenelement (8,9) Reibungsverminderungsmittel (8) aufweist, wo es das Band (5) berührt.

10. Preßmittel nach Anspruch 8 oder 9, worin das Kettenelement (8,9) das flexible Band in eine Abwärtsrichtung spannt.

## Revendications

1. Appareil pour distribuer régulièrement des articles en vrac dans un emballage (11) comprenant
une surface de convoyage (2) pour convoyer l'emballage (11); un moyen agitateur (3) pour agiter l'emballage (11) sur la surface du convoyeur (2) et
un moyen de pression (6) pour exercer une pression sur l'emballage (11) de dessus pendant l'agitation pour l'aplanir;
caractérisé en ce que le moyen de pression (6) comprend une couche flexible chargée.

2. Appareil selon la revendication 1, où la surface de convoyage (2) est constituée par une courroie mobile, et le moyen agitateur (3) comprend un moyen pour agiter la surface de la courroie.

3. Appareil selon la revendication 1 ou la revendication 2, où le moyen agitateur (3) comprend des éléments tournants présentant une ou plusieurs excentricités de surface et agencés pour venir en prise avec la surface inférieure de l'emballage (11), ou de la courroie (2).

4. Appareil selon l'une des revendications précédentes, où le moyen de pression (6) comprend une feuille flexible (5), sur laquelle agissent depuis au-dessus une série de poids (9) ayant une indépendance de mouvement mutuel.

5. Appareil selon la revendication 4, où la série de poids (9) est prévue par un élément de pression supérieur (6) qui étire la feuille flexible (5) dans une direction vers le bas.

6. Appareil selon la revendication 4 ou 5, où la série de poids (9) agit sur la feuille (5) par l'intermédiaire de rouleaux (8).

7. Appareil selon l'une des revendications précédentes, où la portion du moyen de pression (6) qui vient en contact avec les emballages (11) en cours d'utilisation est agencée pour être déplacable dans la direction de convoyage pour diminuer une interférence d'endommagement éventuel avec l'emballage (11) pendant le contact.

8. Moyen de pression destiné à être utilisé dans un appareil en accord avec l'une des revendications précédentes, comportant une couche flexible chargée comprenant une courroie d'entraînement (5) pour venir en contact avec des emballages contenant des articles en vrac depuis au-dessus lorsqu'ils se déplacent le long d'un trajet de convoyage, et un élément formant catenaire (8,9) suspendu pour agir sur la courroie (5) depuis l'arrière, en appliquant ainsi une pression aux emballages (11) à travers la courroie.

9. Moyen de pression selon la revendication 8, où l'élément formant catenaire (8,9) a un moyen de réduction de friction (8) où il vient en contact avec la courroie (5).

10. Moyen de pression selon la revendication 8 ou 9, où l'élément formant catenaire (8,9) étire la courroie flexible dans une direction vers le bas.
